# EUROPEAN PATENT APPLICATION

(11) **EP 4 099 545 A1**
(43) Date of publication of application: **07.12.2022**
(21) Application number: 22176288.3
(22) Date of filing: 31.05.2022
(51) Int. Cl.: H02K 3/28, H02K 3/47, H02K 3/18

(54) **MOTOR**

(30) Priority: 03.06.2021 JP 2021093421
(71) Applicant: Minebea Mitsumi Inc., Kitasaku-gun, Nagano 3890293 (JP)
(72) Inventor: Nishino, Hirotake, Nagano, 389-0293 (JP)
(74) Representative: Westphal, Petra

(57) **Abstract**

[Problem]

A configuration of a motor (1) is simplified.

[Solving method]

The motor (1) includes a yoke (10) including a plurality of magnetic pole parts (20) arranged in a circumferential direction, and a plurality of air core coils (40, 50, 60) arranged in the circumferential direction. The plurality of magnetic pole parts (20) are disposed inside any of the plurality of air core coils (40, 50, 60) in the circumferential direction. Among the plurality of air core coils (40, 50, 60), connection end parts drawn from two adjacent air core coils (40, 50, 60) are electrically connected to each other.

## Description

### Technical Field

The present invention relates to a motor.

### Background Art

A distributed winding technique of disposing a coil across a plurality of magnetic pole parts is known in a rotary electric machine such as a motor. In the distributed winding technique, for example, it is known to use a segment coil.

### Citation List

### Patent Literature

Patent Document 1: JP 2015-6082 A
Patent Document 2: JP 2015-223028 A
Patent Document 3: JP 2016-73120 A

### Summary of Invention

### Technical Problem

Since the segment coil requires a lot of man-hours for forming and welding rectangular wires, the configuration of a motor is complicated. Furthermore, a coil end protruding in an axial direction hinders the miniaturization of a motor.

An object of one aspect is to simplify the configuration of a motor.

### Solution to Problem

In one aspect, a motor includes a yoke including a plurality of magnetic pole parts arranged in a circumferential direction, and a plurality of air core coils arranged in the circumferential direction. The plurality of magnetic pole parts are disposed inside any of the plurality of air core coils in the circumferential direction. Among the plurality of air core coils, connection end parts drawn from two adjacent air core coils are electrically connected to each other.

According one aspect, the configuration of a motor can be simplified.

### Brief Description of Drawings

FIG. 1 is a top view illustrating an example of a motor according to an embodiment.
FIG. 2 is a perspective view illustrating an example of a stator according to the embodiment.
FIG. 3 is a perspective view illustrating an example of a first coil according to the embodiment.
FIG. 4 is a perspective view illustrating an example of bonding the first coil according to the embodiment.
FIG. 5 is a cross-sectional perspective view illustrating an example of the stator according to the embodiment.
FIG. 6 is a cross-sectional perspective view illustrating an example of mounting the first coil according to the embodiment.
FIG. 7 is a cross-sectional perspective view illustrating an example of mounting a second coil according to the embodiment.
FIG. 8 is a cross-sectional perspective view illustrating an example of mounting a third coil according to the embodiment.

### Description of Embodiments

An embodiment of a motor disclosed in the present application will be described below in detail with reference to the drawings. Note that the dimensional relationships, the proportions, and the like between elements in the drawings may differ from those in reality. Among the drawings, parts having mutually different dimensional relationships and proportions may be included. In order to facilitate a description, each drawing may illustrate a coordinate system. In the coordinate system, an extending direction of a shaft 80 to be described below is defined as an axial direction and a rotation direction of a rotor 70 is defined as a circumferential direction.

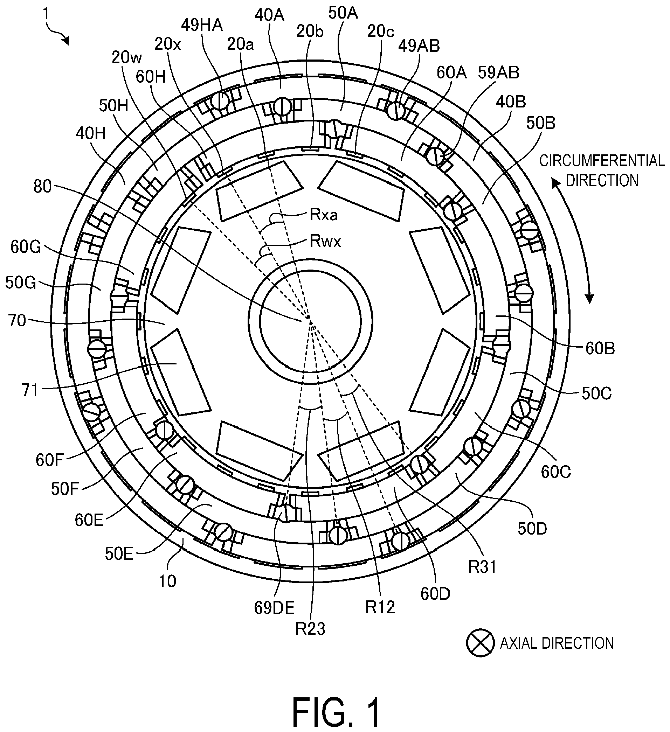

FIG. 1 is a top view illustrating an example of a motor according to an embodiment. The motor 1 illustrated in FIG. 1 includes, for example, a stator 2, a rotor 70, and a shaft 80. The motor 1 to be described in each embodiment is, for example, an inner rotor type brushless motor. For example, the rotor 70 including a plurality of magnets 71 as constituent parts is disposed at the motor 1, and a rotating shaft (shaft) 80 is fixed to the rotor 70. Furthermore, the motor 1 is housed in a frame (not illustrated), for example.

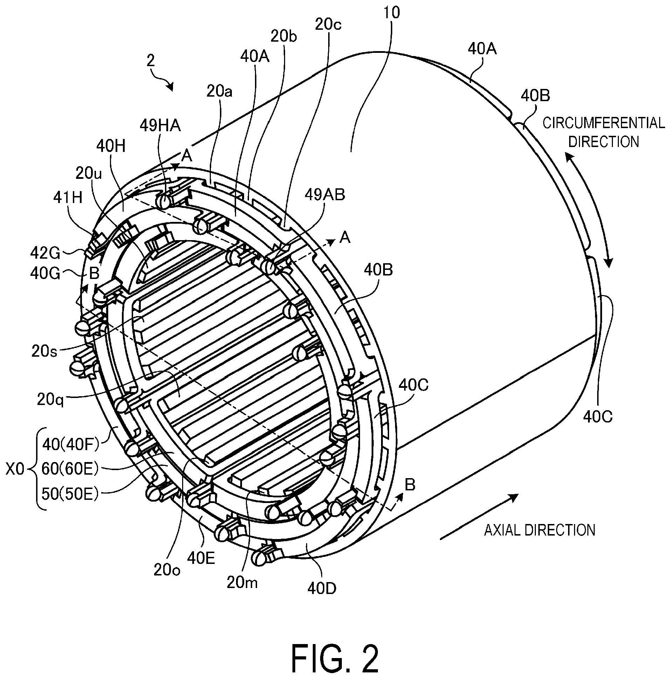

FIG. 2 is a perspective view illustrating an example of the stator according to the embodiment. As illustrated in FIG. 1 and FIG. 2, the stator 2 according to the embodiment includes a yoke 10, a plurality of first coils 40A to 40H, a plurality of second coils 50A to 50H, and a plurality of third coils 60A to 60H. In the following, when the plurality of first coils 40A to 40H are represented without distinction, the first coils 40A to 40H may be simply referred to as first coils 40. The same applies to the plurality of second coils 50A to 50H and the plurality of third coils 60A to 60H. Furthermore, in the following, when the first coils 40, the second coils 50, and the third coils 60 are represented without distinction, the first coils 40, the second coils 50, and the third coils 60 may be simply referred to as air core coils X0.

The motor 1 according to the embodiment is, for example, a motor with 8 poles and 24 slots. That is, the motor 1 according to the embodiment includes the eight magnets 71 and the 24 air core coils X0 as illustrated in FIG. 1.

The stator 2 is formed of, for example, a magnetic body such as stainless steel or a magnetic steel sheet, and includes the yoke 10 having a cylindrical shape and opened in the direction of the rotating shaft, and magnetic pole parts 20. For example, an insulator is formed at the surface of the yoke 10 according to the embodiment by electrodeposition coating. Furthermore, the yoke 10 includes 24 magnetic pole parts 20a to 20x extending in the axial direction. In the following, when the plurality of magnetic pole parts 20a to 20x are represented without distinction, the magnetic pole parts 20a to 20x may be simply referred to as the magnetic pole parts 20.

The magnetic pole parts 20 are protruding parts integrally formed with the yoke 10 and protruding inward in a radial direction from an inner peripheral surface side of the yoke 10. In the embodiment, as illustrated in FIG. 2, the magnetic pole parts 20 have a shape having no end part protruding in the circumferential direction at a distal end side (inside in the radial direction).

In the embodiment, the 24 magnetic pole parts 20 are arranged side by side at equal intervals in the circumferential direction. For example, as illustrated in FIG. 1 and FIG. 2, an angle Rxa between the magnetic pole part 20a and the magnetic pole part 20x adjacent to each other in the circumferential direction is about 15°. Similarly, an angle Rwx between the magnetic pole part 20w and the magnetic pole part 20x adjacent to each other in the circumferential direction is also about 15°.

A plurality of the first coils 40, a plurality of the second coils 50, and a plurality of the third coils 60 are disposed at the magnetic pole parts 20. The first coils 40, the second coils 50, and the third coils 60 are, for example, pre-wound air core coils. The first coils 40 are examples of air core coils of a first group, the second coils 50 are examples of air core coils of a second group, and the third coils 60 are examples of air core coils of a third group.

The air core coil X0 is formed, for example, by bending a conducting wire (for example, a flat wire or a round wire) formed of a conductor such as copper. In the embodiment, the conductor of the conducting wire forming the air core coil X0 is covered with, for example, a coating layer formed of a heat-resistant resin such as polyimide. Furthermore, the conducting wire forming the air core coil X0 may be a self-fusion wire obtained by covering the coating layer with a fusion layer. The fusion layer is formed of a resin capable of forming a film by being melted by heat or a solvent.

The air core coil X0 has a shape curved in the circumferential direction. For example, the first coil 40 is formed into a shape curved along the inner peripheral surface of the yoke 10 in the circumferential direction. Furthermore, in the radial direction, the second coil 50 disposed inside the first coil 40 (at the rotor 70 side) is formed to have a larger curvature in the circumferential direction and a smaller width in the circumferential direction than the first coil 40. Similarly, the third coil 60 is formed to have a larger curvature in the circumferential direction and a smaller width in the circumferential direction than the second coil 50. In the embodiment, lengths of the first coil 40, the second coil 50, and the third coil 60 in the axial direction are substantially the same.

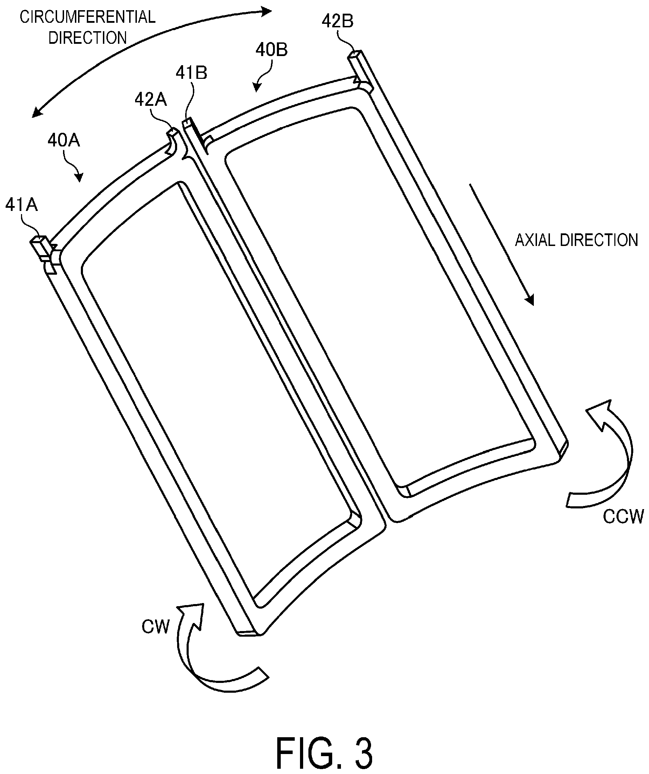

In the embodiment, for example, both a winding start and a winding end of the air core coil X0 protrude to the outside of the yoke 10 to form lead wires. That is, the conducting wire of the air core coil X0 is wound to have a so-called alpha (α) shape. FIG. 3 is a perspective view illustrating an example of the first coil according to the embodiment. In FIG. 3, the magnetic pole parts 20 are not illustrated.

As illustrated in FIG. 3, a winding start 41A and a winding end 42A of the first coil 40A and a winding start 41B and a winding end 42B of the first coil 40B protrude toward a negative direction side in the axial direction (the other end part side of the yoke 10). The winding starts 41A and 41B and the winding ends 42A and 42B are examples of connection end parts.

In the embodiment, the conducting wires of the two air core coils X0 adjacent to each other are wound in opposite directions. For example, as illustrated in FIG. 3, when the conducting wire of the first coil 40B is wound counterclockwise (CCW) from the winding start 41B toward the winding end 42B, the conducting wire of the first coil 40A adjacent to the first coil 40B in the circumferential direction is wound clockwise (CW) from the winding start 41A to the winding end 42A.

In the embodiment, among the eight first coils 40, the first coils 40A, 40C, 40E and 40G are wound clockwise and the other first coils 40B, 40D, 40F and 40H are counterclockwise. Accordingly, a N-pole coil and a S-pole coil are adjacent to each other in the circumferential direction.

Furthermore, as illustrated in FIG. 3, in the first coil 40A wound counterclockwise and the first coil 40B wound clockwise, winding starts from the same direction in the circumferential direction and ends in the same direction. That is, in the two first coils 40 adjacent to each other in the circumferential direction, for example, the winding start 41B of the first coil 40B and the winding end 42A of the first coil 40A are close to each other, and the winding start 41A of the first coil 40A and the winding end 42B of the first coil 40B are far from each other.

Each air core coil X0 is formed into a substantially arc shape when viewed from the top (axial direction side). In this case, as illustrated in FIG. 3, the winding start 41A and the winding end 42A of the first coil 40A and the winding start 41B and the winding end 42B of the first coil 40B protrude toward the negative direction side in the axial direction. If necessary, each air core coil X0 may also protrude in the circumferential direction or the axial direction.

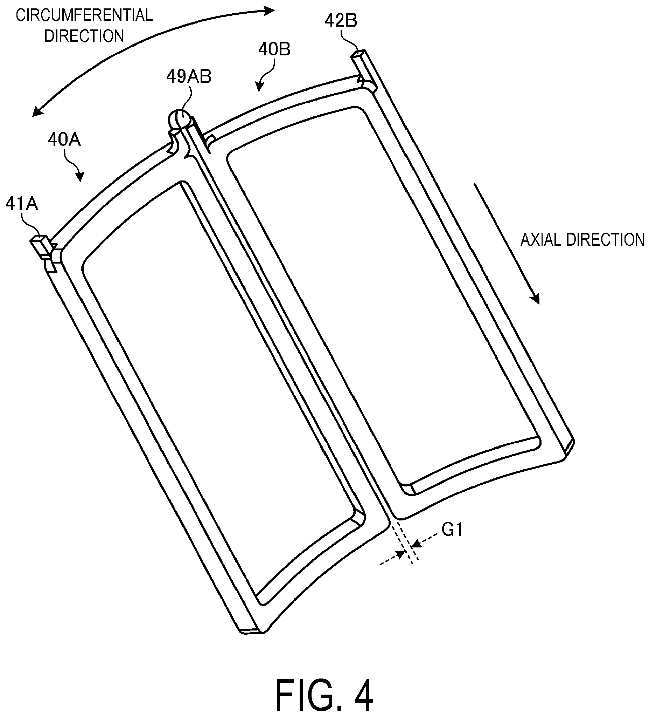

Furthermore, in the embodiment, after the air core coils X0 are disposed at the magnetic pole parts 20, the winding starts and the winding ends of the air core coils X0 adjacent to each other are electrically connected. FIG. 4 is a perspective view illustrating an example of bonding the first coils according to the embodiment. Also in FIG. 4, the magnetic pole parts 20 are not illustrated.

In the embodiment, the air core coils X0 adjacent to each other in the circumferential direction are bonded by bonding parts 49, 59, or 69. For example, as illustrated in FIG. 4, the first coil 40A and the first coil 40B adjacent to the first coil 40A are electrically connected by a bonding part 49AB. The bonding part 49AB is formed by, for example, welding or ultrasonically bonding the winding end 42A of the first coil 40A and the winding start 41B of the first coil 40B. In FIG. 1, FIG. 2, and FIG. 5, some of the bonding parts may not be illustrated.

Furthermore, in the embodiment, as illustrated in FIG. 4, the first coils 40A and 40B adjacent to each other in the circumferential direction are separated at portions other than the bonding parts 49AB. For example, at an arc portion (curved portion) at a positive direction side in the axial direction, a gap G1 is formed between the first coil 40A and the first coil 40B. In the two air core coils X0 adjacent to each other in the circumferential direction, portions other than the connection end part may be insulated from each other by an insulating member such as a resin (not illustrated). The insulating member may be provided in the gap G1.

In the embodiment, the above configuration of the first coil 40 illustrated in FIG. 3 and FIG. 4 also applies to the second coil 50 and the third coil 60 with some exceptions. For example, the second coil 50A and the second coil 50B adjacent to each other in the circumferential direction and the third coil 60D and the third coil 60E adjacent to each other in the circumferential direction are also electrically connected by the bonding parts 59AB and 69DE illustrated in FIG. 1, respectively.

However, in the embodiment, the second coil 50 located, in the circumferential direction, between the first coil 40 and the third coil 60 wound in the same direction is wound in an opposite direction. For example, similarly to the first coil 40, the third coils 60A, 60C, 60E and 60G are wound clockwise and the other third coils 60B, 60D, 60F and 60H are wound counterclockwise. On the other hand, a conducting wire is wound counterclockwise (CCW) in the second coil 50A located between the first coil 40A and the third coil 60A including conducting wires wound clockwise (CW). That is, the second coils 50B, 50D, 50F, and 50H are wound clockwise, and the other second coils 50A, 50C, 50E, and 50G are wound counterclockwise.

Furthermore, in the embodiment, the first coils 40, the second coils 50, and the third coils 60 are disposed at positions different from each other in the circumferential direction. For example, as illustrated in FIG. 1, in the circumferential direction, an angle R12 between the first coil 40E and the second coil 50E is about 15°. Similarly, an angle R23 between the second coil 50E and the third coil 60E and an angle R31 between the first coil 40E and the third coil 60D are also about 15°.

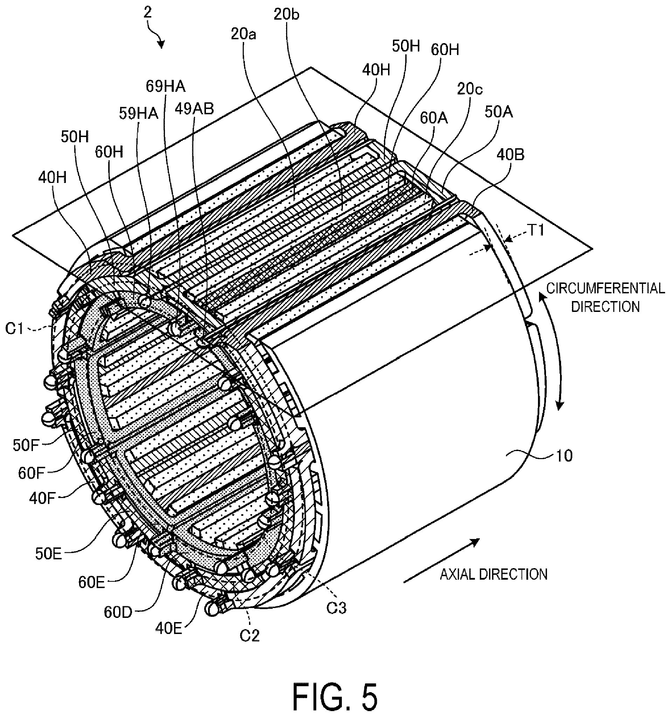

In this case, in the embodiment, a part of the first coil 40 opposes parts of the two second coils 50 and the two third coils 60 in the radial direction. For example, as illustrated in FIG. 5, a part of the first coil 40F opposes parts of the second coils 50E and 50F and opposes parts of the third coils 60E and 60F in the radial direction. Similarly, a part of the second coil 50E opposes parts of the first coils 40E and 40F and opposes parts of the third coils 60D and 60E, and a part of the third coil 60E opposes parts of the first coils 40E and 40F and opposes parts of the second coils 50E and 50F.

FIG. 5 is a cross-sectional perspective view illustrating an example of the stator according to the embodiment. FIG. 5 illustrates a cross section taken along line A-A in FIG. 2. As illustrated in FIG. 5, the second coil 50H and the second coil 50A are adjacent to each other in the circumferential direction without interposing another air core coil X0 or magnetic pole part 20. Similarly, the third coil 60H and the third coil 60A are also adjacent to each other in the circumferential direction without interposing another air core coil X0 or magnetic pole part 20. In FIG. 5, the first coil 40A, an arc part (curved part) of the third coil 60H, and an arc part (curved part) of the third coil 60A are not visible.

Furthermore, as illustrated in FIG. 5, the magnetic pole part 20a is disposed inside the second coil 50H and inside the third coil 60H in the circumferential direction. Similarly, as illustrated in FIG. 2, the magnetic pole part 20a is disposed inside the first coil 40A in the radial direction. Similarly, the other magnetic pole parts 20b to 20x are also disposed inside at least any of the first coils 40, the second coils 50, and the third coils 60 in the circumferential direction.

As illustrated in FIG. 5, the eight first coils 40A to 40H arranged in a substantially circular pattern in the circumferential direction form a first row C1. Similarly, the eight second coils 50A to 50H arranged in a substantially circular pattern in the circumferential direction form a second row C2, and the eight third coils 60A to 60H arranged in a substantially circular pattern in the circumferential direction form a third row C3.

The first row C1, the second row C2, and the third row C3 form a substantially concentric circle centered around the shaft 80. That is, the first coils 40A to 40H are disposed so that distances in the radial direction from the shaft 80 are substantially the same. Furthermore, the second coils 50A to 50H are disposed inside the first row C1 in the radial direction, and the third coils 60A to 60H are disposed inside the first columns C1 and the second row C2 in the radial direction.

Furthermore, in the embodiment, the first coils 40, the second coils 50, and the third coils 60 correspond to a U phase, a V phase, and a W phase of the motor 1, respectively. The arrangement of the U phase, the V phase, and the W phase is an example, and the order may be different from the order of the example described in the embodiment.

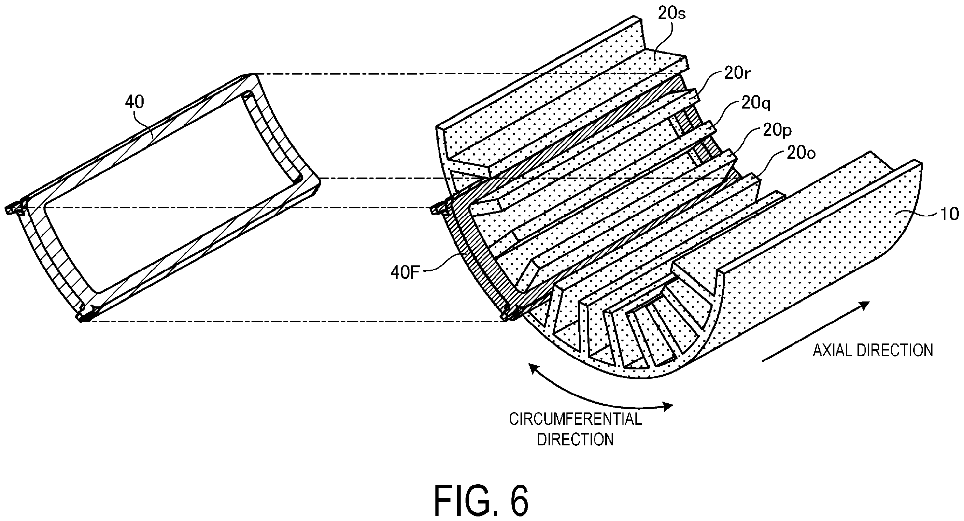

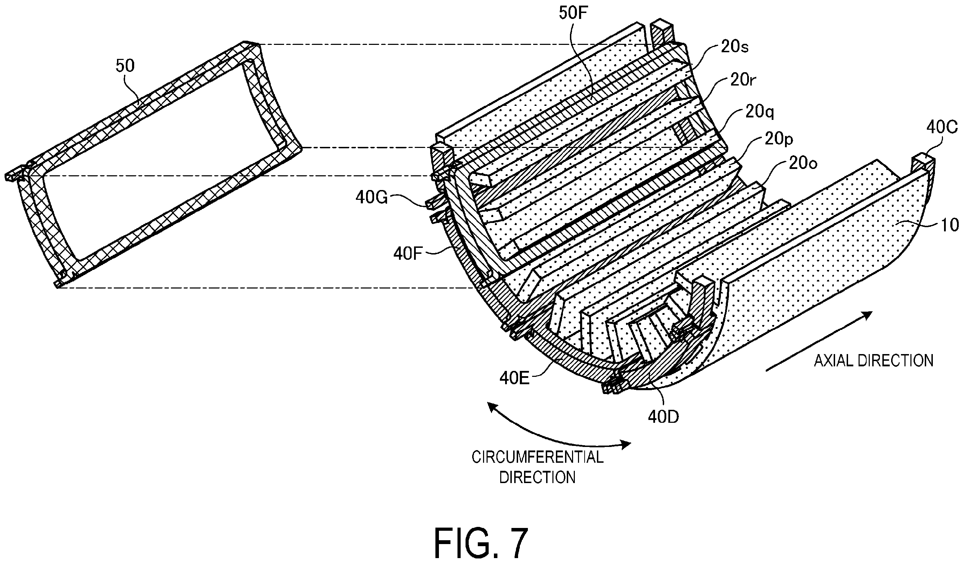

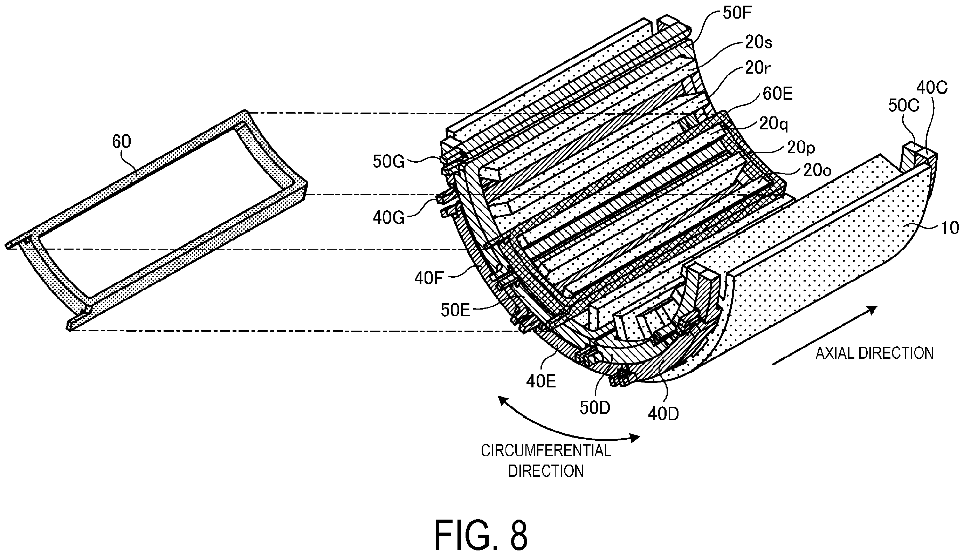

In the embodiment, the air core coils X0 are disposed at the magnetic pole parts 20 in the order of the first coils 40, the second coils 50, and the third coils 60. FIG. 6 is a cross-sectional perspective view illustrating an example of mounting the first coil according to the embodiment. FIG. 7 is a cross-sectional perspective view illustrating an example of mounting the second coil according to the embodiment. FIG. 8 is a cross-sectional perspective view illustrating an example of mounting the third coil according to the embodiment. FIG. 6 to FIG. 8 illustrate cross sections taken along line B-B in FIG. 2. In the embodiment, the air core coils X0 are disposed, for example, after the magnetic pole parts 20 are covered with an annular insulating member (not illustrated).

As illustrated in FIG. 6, the first coil 40F is disposed in contact with the magnetic pole parts 20p and 20r among the 24 magnetic pole parts 20. At this time, the magnetic pole part 20q adjacent to the magnetic pole part 20p and the magnetic pole part 20r in the circumferential direction is also disposed inside the first coil 40F. That is, the three magnetic pole parts 20p, 20q, and 20r are disposed inside the first coil 40F. The other first coils 40A to 40E, 40G, and 40H are similarly disposed.

Furthermore, as illustrated in FIG. 7, the second coil 50 is disposed, in the radial direction, inside the first coil 40 disposed at the magnetic pole parts 20. At this time, as illustrated in FIG. 7, the second coil 50F is disposed at a position different from the positions of the first coils 40F and 40G in the circumferential direction, the first coils 40F and 40G being adjacent to the second coil 50F in the radial direction.

For example, among the three magnetic pole parts 20q, 20r and 20s disposed inside the second coil 50F in the circumferential direction, only the magnetic pole parts 20q and 20r are disposed inside the first coil 40F. The magnetic pole part 20s is disposed inside the first coil 40G, not inside the first coil 40F. That is, the second coil 50 is disposed across the two first coils 40 in the circumferential direction.

Similarly, as illustrated in FIG. 8, the third coil 60 is disposed, in the radial direction, inside the second coil 50 disposed at the magnetic pole parts 20. At this time, as illustrated in FIG. 8, the third coil 60E is disposed at a position different from the positions of the second coils 50E and 50F in the circumferential direction, the second coils 50E and 50F being adjacent to the third coil 60E in the radial direction. Furthermore, the third coil 60E is disposed at a position different from the position of any of the first coils 40 in the circumferential direction.

For example, among the three magnetic pole parts 20o, 20p, and 20q disposed inside the third coil 60E in the circumferential direction, only the magnetic pole parts 20o and 20p are disposed inside the second coil 50E, and the magnetic pole part 20r is disposed inside the second coil 50F. Furthermore, among the three magnetic pole parts, the magnetic pole part 20o is disposed at the first coil 40E, while the magnetic pole parts 20p and 20q are disposed at the first coil 40F. That is, the third coil 60 is disposed across the two first coils 40 and across the two second coils 50 in the circumferential direction.

Each magnetic pole part 20 is disposed inside at least one air core coil X0 in the circumferential direction. Furthermore, in the embodiment, each air core coil X0 is disposed across a plurality of the magnetic pole parts 20 in the circumferential direction. For example, the magnetic pole part 20b is disposed inside the first coil 40A, inside the second coil 50A, and inside the third coil 60H in the circumferential direction.

As described above, the eight first coils 40 are disposed at the first row C1, the eight second coils 50 are disposed at the second row C2, and the eight third coils 60 are disposed at the third column C3. As to the stator 2 where all the air core coils X0 are disposed, stoppers (not illustrated) may be further mounted at both sides of the stator 2 in the axial direction.

As described above, the motor 1 according to the embodiment includes the yoke 10 including the plurality of magnetic pole parts 20 arranged in the circumferential direction, and the plurality of air core coils 40, 50, and 60 arranged in the circumferential direction. The plurality of magnetic pole parts 20 are disposed inside any of the plurality of air core coils 40, 50, and 60. Among the plurality of air core coils 40, 50, and 60, connection end parts drawn from two adjacent air core coils are electrically connected to each other. According to such a configuration, the configuration of the motor can be simplified and man-hours in manufacturing can be reduced.

Furthermore, according to such a configuration, the height of a coil end protruding from the yoke 10 in the axial direction can be reduced. Furthermore, according to such a configuration, the two adjacent air core coils X0 can be connected, so that the number of parts can be reduced, a resistance value of the entire motor can be reduced, and power consumption can be reduced.

The configuration of each of the embodiments has been described above, but the embodiments are not limited. For example, the motor according to each embodiment is not limited to a motor with 8 poles and 24 slots, and the number of coils and the number of magnets may be changed. Furthermore, the example of disposing the air core coil X0 across the three magnetic pole parts 20 has been described, but the embodiment is not limited to this example. For example, the air core coil X0 may be disposed across the two magnetic pole parts 20, or may be disposed across the four or more magnetic pole parts 20. Furthermore, the number of rows of the air core coils X0 is also freely determined, and a configuration of not forming the third column C3 or a configuration of further forming a fourth column C4 may be available.

Moreover, the configuration where the air core coils X0 adjacent to each other in the circumferential direction are directly adjacent to each other without interposing another magnetic pole part 20 has been described, but the embodiment is not limited to this configuration, and the air core coils X0 may be configured to be adjacent to each other at predetermined intervals in the circumferential direction.

Furthermore, the motor according to each embodiment is, for example, an inner rotor type brushless motor, but the embodiment is not limited to the inner rotor type brushless motor, and the air core coil X0 according to the embodiment may be employed in an outer rotor type motor. Furthermore, the stator 2 including the air core coils X0 may be employed in, for example, a rotary electric machine other than a motor, such as a generator.

Furthermore, when there is no problem in the arrangement of the air core coils X0, the magnetic pole part 20 may be shaped to include two end parts protruding in the circumferential direction, for example, at a distal end side (inside in the radial direction).

Furthermore, the configuration of forming the air core coil X0 by using a self-fusion wire has been described, but the embodiment is not limited to this configuration and, for example, a coil wound by using a bobbin may be covered with a resin material such as a varnish.

Embodiments and modified examples of the present invention have been described, but the present invention is not limited to the embodiments and modified examples, and various modifications are possible without departing from the spirit of the present invention. Various modifications within a scope not departing from the gist are included in the technical scope of the present invention, and this is obvious to a person having skill in the art from the description of the claims.

### Reference Signs List

1 Motor, 2 Stator, 10 Yoke, 20 Magnetic pole part, 40 First coil, 50 Second coil, 60 Third coil, 49, 59, 69 Bonding part

## Claims

1. A motor (1) comprising:
a yoke (10) including a plurality of magnetic pole parts (20) arranged in a circumferential direction; and
a plurality of air core coils (40, 50, 60) arranged in the circumferential direction, wherein
the plurality of magnetic pole parts (20) are disposed inside any of the plurality of air core coils (40, 50, 60) in the circumferential direction, and
among the plurality of air core coils (40, 50, 60), connection end parts drawn from two adjacent air core coils (40, 50, 60) are electrically connected to each other.

2. The motor (1) according to claim 1, wherein winding directions of the two adjacent air core coils (40, 50, 60) are opposite to each other.

3. The motor (1) according to claim 1 or 2, wherein
among the plurality of air core coils (40, 50, 60), air core coils (40) of a first group forming a first row (C1) in a radial direction form a U phase, air core coils (50) of a second group forming a second row (C2) in the radial direction form a V phase, and air core coils (60) of a third group forming a third row (C3) in the radial direction form a W phase.

4. The motor (1) according to claim 3, wherein the air core coils (40) of the first group, the air core coils (50) of the second group, and the air core coils (60) of the third group are arranged at positions different from each other in the circumferential direction.

5. The motor (1) according to claim 3 or 4, wherein the air core coils (40) of the first group are not adjacent to the air core coils (50) of the second group nor the air core coils (60) of the third group in the circumferential direction.

6. The motor (1) according to any one of claims 1 to 5, wherein the air core coils (40, 50, 60) are disposed across two or more magnetic pole parts (20) among the plurality of magnetic pole parts (20).
